# EUROPEAN PATENT SPECIFICATION

(11) **EP 2 765 495 B1**
(45) Date of publication and mention of the grant of the patent: **22.06.2016**
(21) Application number: 13154309.2
(22) Date of filing: 07.02.2013
(51) Int. Cl.: G06F 3/0482, G06F 3/0485, G06F 9/44

(54) **A method and a system for generating a graphical user interface**
Verfahren und System zur Erzeugung einer grafischen Benutzeroberfläche
Procédé et système pour générer une interface utilisateur graphique

(43) Date of publication of application: 13.08.2014
(73) Proprietor: Advanced Digital Broadcast S.A., 1292 Chambesy (CH)
(72) Inventor: Wielgosz, Marcin, 65-119 Zielona Gora (PL)
(74) Representative: Eupatent.pl

(56) References cited:
- US-A1- 2006 154 696
- US-A1- 2010 277 420

## Description

The present invention relates to a graphical user interface configured to display a list of elements and a method and system for generating thereof.

One of the aims of designing a user-friendly graphical user interface is to provide attractive graphical effects, which are both aesthetically appealing and make the interface intuitive to use. A well-known problem is how to display a list of items and indicate one of the items as the item of interest. The items are typically text strings or graphical icons.

A most common way to display the list of items is to configure a first graphics layer of the graphical user interface as a static background and a second graphics layer to display the items over the background in a scrolling manner. The background may have a predetermined area, e.g. the middle area, which is distinguished from the surrounding area by a special effect, such as a highlight or a frame. The item which is displayed over the predetermined area is treated as the item of interest. Such display does not alter the way, in which the items are displayed on the second graphics layer.

Another way to display the list of items is to configure a first graphics layer of the graphical user interface to display the items and a second graphics layer to display a symbol, such as an asterisk or a frame in a scrolling manner over the first layer. The item over which the symbol is displayed is treated as the item of interest. Such display does not alter the way, in which the items are displayed on the first graphics layer.

For example, a US patent US6448987 presents menu structures having a balanced, predominantly circular appearance for a graphic user interface. The menu has two concentric rings having icons arranged along the rings identifying menu choices. The icons are individually selectable. The GUI system allows a user to select a category and sub-category of digital contents by selecting an icon from the outer and inner menu ring, respectively. In response to each selection, the GUI generates animated effects on the graphic display to highlight the selected item, such as rotation effect which may be rendered by blurring individual graphic details of the rings to give the visual effects of motion. In that interface, the same effect is applied to all icons of the list in the same manner.

A prior art publication US 20100277420 A1 entitled "Hand Held Electronic Device and Method of Performing a Dual Sided Gesture" discloses a method and hand held electronic device for performing a dual sided gesture on respective touch sensitive surfaces of a hand held electronic device. The method includes displaying an object on a display screen of the hand held electronic device, which is viewable from at least one side of the hand held electronic device. A virtual center of gravity associated with the displayed object is then defined. Simultaneous gestures are then received tracking the position and movement of an end of a pointer on each of a pair of respective surfaces of the hand held electronic device, each surface having a corresponding touch sensitive input. The location and movement of each gesture is then compared relative to the defined virtual center of gravity, and the displayed object is repositioned in response to the location and movement of each gesture relative to the defined virtual center of gravity.

Another prior art publication US 20060154696 A1 entitled "Magnification of currently selected menu item" discloses a method and apparatus with a graphical user interface for controlling the apparatus in which a currently selected menu item is magnified in height relative to other items in the menu so as to distinguish the item. While in addition to providing an appealing way to indicate which item is currently selected, the magnification makes the item easier to read, particularly in poorer lighting conditions.

Another prior art document EP1058875B1 discloses a GUI system with a series of tools illustrated arranged along a radius of the domain circle. The viewer may scroll from tool to tool within the television domain, and may change domains while using one of the tools. As the viewer scrolls through the tools, the viewer gets a feeling of motion in a direction perpendicular to the direction of motion between domains. Transitional segments are provided to enhance this perception of movement between tools as compared to movement between domains. Further, at the intersection of each domain and tool, representing a layer or level in the system and sometimes referred to herein as a "zone," the viewer is given a selection of programming choices for viewing. The specific programming choices in each zone are determined by the current domain and category of programming or channel, and the manner in which these choices are presented is determined by the tool being used. Different channels of programming content available in a given zone are aligned along an additional axis, pictorially represented in a linear fashion along a virtual vertical axis orthogonal to the radius. The movement within a zone from channel to channel or from category to category provides the feeling of transition which is different than the transitions between domains or tools.

In order to improve the appearance and intuitiveness to use, it would be desirable to provide a graphical user interface which could alter the way in which the item of interest is displayed, such that the item of interest is displayed using a different graphics effect than the rest of the items of the list. The aim of the present invention is to provide effective technical means to implement such graphical user interface.

The object of the present invention is a method for generating a graphical user interface with a list of elements, which comprises the steps of receiving a list of elements, creating a first graphics layer in front of a second graphics layer, the first graphics layer comprising a blank area configured to allow visibility of the contents of the lower layers in a final combined picture; configuring the first graphics layer to display the list of elements using a first graphics effect and configuring the second graphics layer to display the list of elements using a second graphics effect different from the first graphics effect, receiving an input for navigating the list of elements, processing the list of elements according to the received input to alter the display of the elements simultaneously on the first graphics layer and on the second graphics layer.

The method may further comprise creating a third graphics layer below the second graphics layer, wherein the first graphics layer comprises at least partially transparent areas outside the blank area and wherein the second graphics layer comprises blank areas outside the area corresponding to the blank area of the first graphics layer.

The method may further comprise creating a third graphics layer between the first graphics layer and the second graphics layer, wherein the first graphics layer comprises at least partially transparent areas outside the blank area and wherein the third graphics layer comprises a blank area in the area corresponding to the blank area of the first graphics layer.

Preferably, the third graphics layer comprises a still image.

Preferably, the third graphics layer comprises a video signal.

Preferably, the elements of the list are text elements.

Preferably, the first graphics effect or the second graphics effect indicates properties of font by which the text elements are displayed.

Preferably, the elements of the list are graphical icons and wherein the first graphics effect or the second graphics effect indicates at least one of: display of the icon in a particular color, with a blur effect, with a sharpness effect, with a halo effect, with a highlight effect, in an enlarged scale.

Preferably, the first graphics effect indicates a background.

Preferably, when the layers are displayed on top of each other, two areas of the first graphics layer are adjacent to one area of the second graphics layer.

Preferably, the display of the elements is altered simultaneously on the first graphics layer and on the second graphics layer as a smooth scrolling transition.

Another object of the present invention is a graphical user interface for displaying a list of elements, comprising a first graphics layer in front of a second graphics layer, the first graphics layer comprising a blank area configured to allow visibility of the contents of the lower layers in a final combined picture; the first graphics layer being configured to display a list of elements using a first graphics effect and the second graphics layer being configured to display the same list of elements using a second graphics effect different from the first graphics effect.

A further object of the present invention is a system for generating a graphical user interface with a list of elements stored in a list memory, the list being configured to be navigated via a user interface, wherein the system further comprises: a multi-layer user interface configured to display a first graphics layer in front of a second graphics layer, the first graphics layer comprising a blank area configured to allow visibility of the contents of the lower layers in a final combined picture; a graphics processor configured to control the first graphics layer to display the list of elements using a first graphics effect and to control the second graphics layer to display the list of elements using a second graphics effect different from the first graphics effect.

The object of the present invention is also a computer program comprising program code means for performing all the steps of the computer-implemented method according to the invention, as well as a computer readable medium storing computer-executable instructions performing all the steps of the computer-implemented method according to the invention when executed on a computer.

The present invention is shown by means of exemplary embodiments on a drawing, in which:
Figs. 1A-1C show exemplary embodiments of the layers of the graphical user interface,
Fig. 2 shows an exemplary embodiment of the graphical user interface while navigating the list of elements.
Fig. 3 shows the system of the present invention,
Fig. 4A-4C show exemplary embodiments of the graphical user interface with different effects used for the first and second layer.

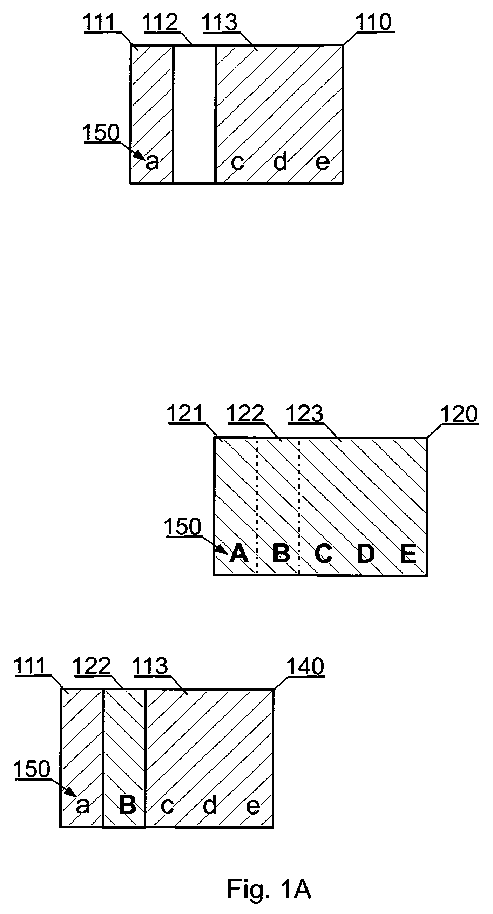

The graphical user interface according to the invention, as schematically shown in various embodiments on Figs. 1A-1C, comprises at least two layers: a first graphics layer 110 and a second graphics layer 120. The first layer 110 is in front of the second layer, i.e. closer to the viewer. The first layer 110 comprises a blank area 112 configured to allow visibility of the contents of the lower layers of the final combined picture, i.e. layers located below the first layer.

In the first embodiment shown in Fig. 1A, the graphical user interface comprises only two layers, namely the first layer 110 over the second layer 120. The final combined picture 140 comprises three areas visible, namely areas 111, 113 from the first layer 110 and an area 122 from the second layer.

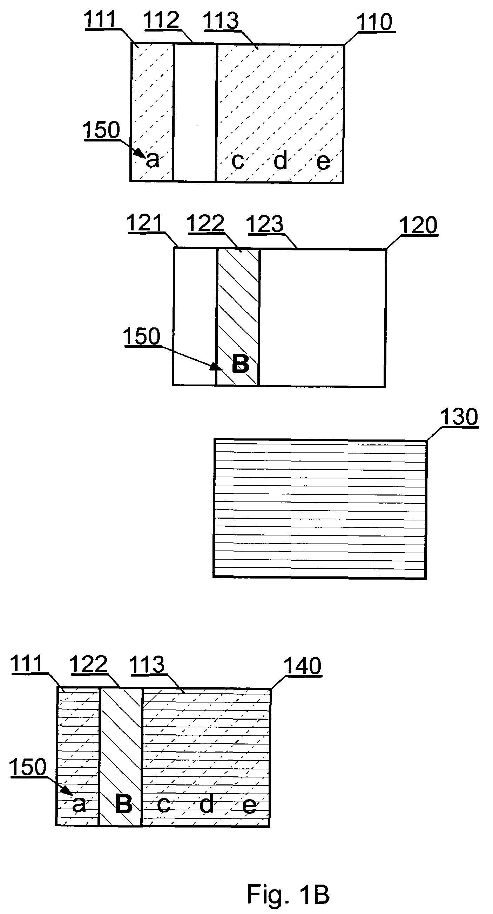

In the second embodiment shown in Fig. 1B, the graphical user interface comprises three layers, namely the first layer 110 over the second layer 120, which is over the third layer 130. The first layer 110 has a blank area 112 and two transparent areas 111, 113 displaying non-transparent items 150. The second layer 120 has area 122 displaying non-transparent item(s) 150 and two blank areas 121, 123. The third layer 130 is a bottom-most layer and may comprise a still picture or a video signal. In the final picture 140 there are visible areas 122 and areas 111, 113 overlaid on the third layer 130.

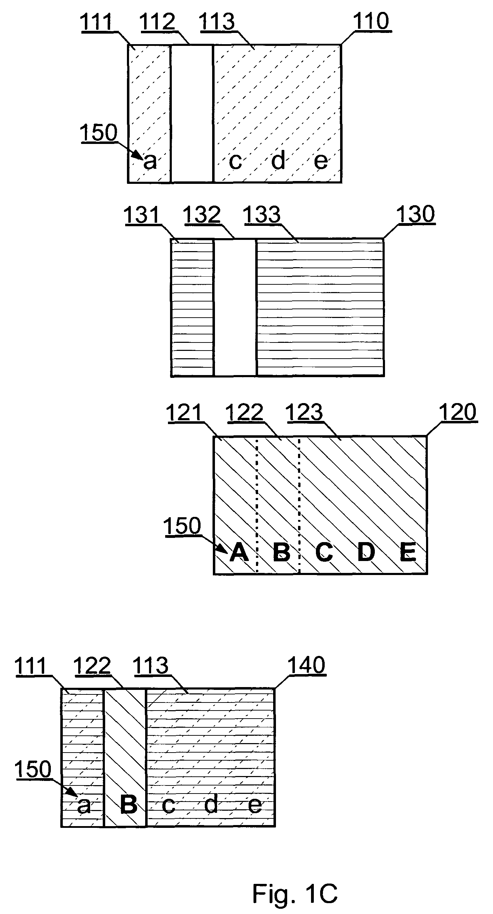

In the third embodiment shown in Fig. 1C, the graphical user interface comprises three layers, namely the first layer 110, the second layer 120, and the third layer 130 between the first layer 110 and the second layer 120. The first layer 110 has a blank area 112 and two transparent areas 111, 113 displaying non-transparent items 150. The second layer 120 displays items 150. The third layer 130 is a middle layer and may comprise a still picture or a video signal. It further comprises a blank area 132. In the final picture 140 there are visible areas 122 and areas 111, 113 overlaid on the third layer 130.

None of the embodiments is limited to two or three layers, it is possible for the graphical user interface to comprise more layers above, below or in between the layers 110, 120, 130.

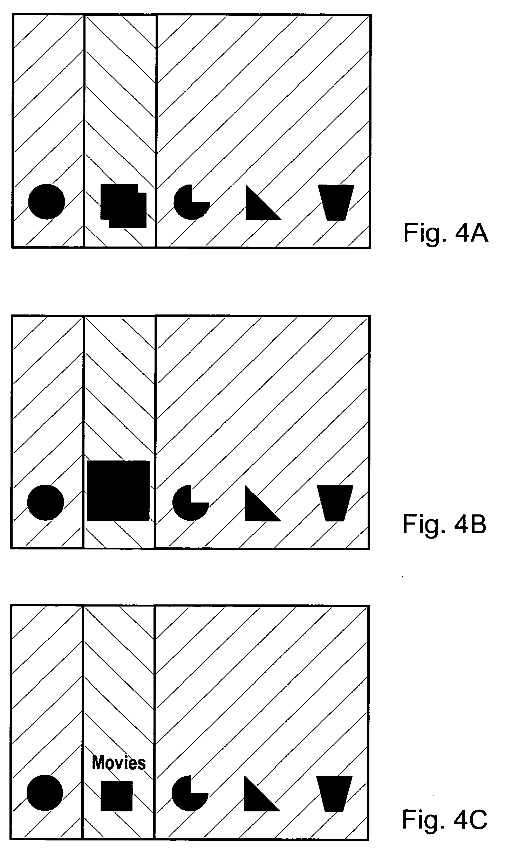

The first and second graphics layers 110, 120 are configured to display a list 150 of elements, including elements 151-155 (five elements are indicated as example only) in a manner known in the art. Both graphics layers 110, 120 are configured to display the same list 150, but using different graphics effects: the first layer 110 is configured to render a first graphics effect different from the second graphics effect configured for the second layer 120. The graphics effects may include, but are not limited to displaying the elements in a particular color, with a blur or sharpness effect, with a shadow (as shown in Fig. 4A) or highlight effect, in an enlarged view (as shown in Fig. 4B), with different backgrounds (e.g. one layer may include a video background) etc.

Preferably, the size of the area 122 is such that it fully displays one element of the list 150. In other embodiment, the size of the area 122 is such that it may display about ¾ of one element of the list 150. In such case the remaining ¼ of the respective element will be presented in areas 111 and 113 respectively (preferably 1/8 in the area 111 and 1/8 in the area 113).

Preferably the width of areas 112, 122 and 132 is less than their respective height.

The area 122 may be a vertical area located in the middle of the picture between areas 111, 113. Alternatively, the area 122 may be a horizontal area. Furthermore, the area 122 may be an area in the middle of the picture, non-adjacent to any picture edges. Furthermore, the area may be adjacent to three edges of the picture, such that the picture is divided into two parts only.

Furthermore, if the elements are text elements, the graphics effects may involve modification of properties of the font by which the elements are displayed, such as changing the letter case (as shown in Fig. 1). The list may further comprise multi-part elements, wherein one part of the element (e.g. a graphical icon) may be displayed on the first layer and more parts of the element (e.g. a graphical icon and a text description) may be displayed on the second layer (as shown in Fig. 4C). In that case, the elements 151, 153-155 are visible with a first graphics effect on the first layer 110 and the element 152 is visible with a second graphics effect on the second layer 120.

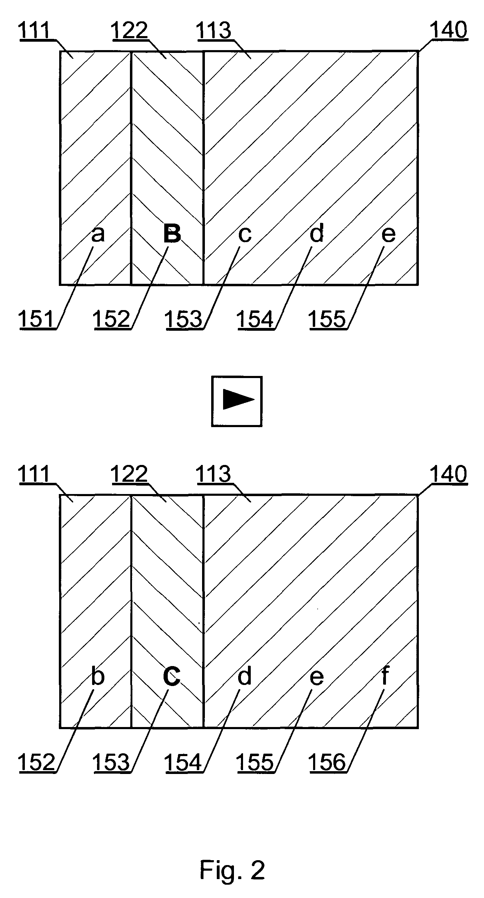

When a user invokes input for navigating the list 150, the list 150 is processed accordingly. For example, in response to a shift request, the items are rearranged upwards or downwards. In response to a sort request, the items are sorted in a specific order. Since both graphics layers 110, 120 are configured to display the same list of elements, the display of the list is effected on both layers simultaneously. For example, as shown in Fig. 2 when user invokes an input to shift the list to the right, all elements on both layers are shifted to the right, which results in change of appearance of element 152 to the appearance defined by graphics effect of the first graphics layer 110 and change of appearance of element 153 to the appearance defined by the second graphics effect of the second graphics layer 120.

In order to achieve simultaneous change in display of the list of elements on both layers 110, 120, it is not important which layer is the layer of focus - the graphical user interface shall be configured such that navigational inputs directed to one of the layers 110, 120 are simultaneously passed to the second layer 110, 120. This can be achieved either by specifying that one of layers, e.g. the first layer 110, is the layer in focus and navigational requests are redirected to the second layer 120. Alternatively, this can be achieved by automatically transmitting all navigational requests to both layers 110, 120 simultaneously.

Preferably a shift of the list elements that are displayed is executed as a smooth scrolling transition, so that a user can clearly notice that both lists, present on different layers, scroll simultaneously.

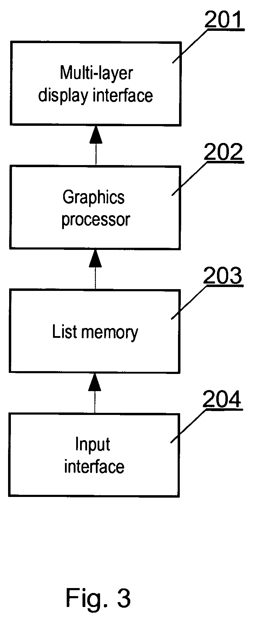

Fig. 3 shows the system of the present invention. The system comprises a multi-layer display interface 201, i.e. an interface capable of displaying a plurality of layers 110, 120, 130. The interface 201 is controlled by a graphics processor 202 which defines the appearance of individual layers 110, 120, 130. The appearance for both the first and second graphics layer 110, 120 is defined according to the same list 150 read from the list memory 203. The contents of the list 150 are processed accordingly to an input received via an input interface 204. The system can be implemented in any device which needs to display lists, such as a television set, an audio/video player, a mobile phone, a personal computer etc.

It can be easily recognized, by one skilled in the art, that the aforementioned method for generating the graphical user interface may be performed and/or controlled by one or more computer programs. Such computer programs are typically executed by utilizing the computing resources of the device. The computer programs can be stored in a non-volatile memory, for example a flash memory or in a volatile memory, for example RAM and are executed by the processing unit. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A method for generating a graphical user interface with a list of elements, **characterized in that** it comprises the steps of:
- receiving a list (150) of elements;
- creating a first graphics layer (110) in front of a second graphics layer (120), the first graphics layer (110) comprising a blank area (112) configured to allow visibility of the contents of the lower layers (120) in a final combined picture;
- configuring the first graphics layer (110) to display the list (150) of elements using a first graphics effect and configuring the second graphics layer (120) to display the list (150) of elements using a second graphics effect different from the first graphics effect;
- receiving an input for navigating the list (150) of elements;
- processing the list (150) of elements according to the received input to alter the display of the elements (151-155) simultaneously on the first graphics layer (110) and on the second graphics layer (120).

2. The method according to claim 1, further comprising creating a third graphics layer (130) below the second graphics layer (120), wherein the first graphics layer (110) comprises at least partially transparent areas (111, 113) outside the blank area (112) and wherein the second graphics layer (120) comprises blank areas (121, 123) outside the area (122) corresponding to the blank area (112) of the first graphics layer (110).

3. The method according to claim 1, further comprising creating a third graphics layer (130) between the first graphics layer (110) and the second graphics layer (120), wherein the first graphics layer (110) comprises at least partially transparent areas (111, 113) outside the blank area (112) and wherein the third graphics layer (120) comprises a blank area (132) in the area corresponding to the blank area (112) of the first graphics layer (110).

4. The method according to claims 2 or 3, wherein the third graphics layer comprises a still image.

5. The method according to claims 2 or 3, wherein the third graphics layer comprises a video signal.

6. The method according to claim 1, **characterized in that** the elements (151-155) of the list (150) are text elements.

7. The method according to claim 1, **characterized in that** the first graphics effect or the second graphics effect indicates properties of font by which the text elements are displayed.

8. The method according to claim 1, **characterized in that** the elements (151-155) of the list (150) are graphical icons and wherein the first graphics effect or the second graphics effect indicates at least one of: display of the icon in a particular color, with a blur effect, with a sharpness effect, with a halo effect, with a highlight effect, in an enlarged scale.

9. The method according to claim 1, **characterized in that** the first graphics effect indicates a background.

10. The method according to claim 1, **characterized in that** when the layers (110, 120, 130) are displayed on top of each other, two areas (111, 113) of the first graphics layer (110) are adjacent to one area (122) of the second graphics layer (120).

11. The method according to claim 1, **characterized in that** the display of the elements (151-155) is altered simultaneously on the first graphics layer (110) and on the second graphics layer (120) as a smooth scrolling transition.

12. A system for generating a graphical user interface with a list (150) of elements stored in a list memory (203), the list (150) being configured to be navigated via a user interface (204), **characterized in that** the system further comprises:
- a multi-layer user interface (201) configured to display a first graphics layer (110) in front of a second graphics layer (120), the first graphics layer (110) comprising a blank area (112) configured to allow visibility of the contents of the lower layers (120) in a final combined picture;
- a graphics processor (202) configured to control the first graphics layer (110) to display the list (150) of elements using a first graphics effect and to control the second graphics layer (120) to display the list (150) of elements using a second graphics effect different from the first graphics effect.

13. A computer program comprising program code means for performing all the steps of the computer-implemented method according to any of claims 1-11 when said program is run on a computer.

14. A computer readable medium storing computer-executable instructions performing all the steps of the computer-implemented method according to any of claims 1-11 when executed on a computer.

## Patentansprüche

1. Verfahren zum Erzeugen einer grafischen Benutzeroberfläche mit einer Liste an Elementen, **dadurch gekennzeichnet, dass** es die folgenden Schritte umfasst:
- Empfangen einer Liste (150) an Elementen;
- Erzeugen einer ersten Grafikschicht (110) vor einer zweiten Grafikschicht (120), wobei die erste Grafikschicht (110) einen leeren Bereich (112) umfasst, welcher dazu eingerichtet ist, Sichtbarkeit der Inhalte der unteren Schichten (120) in einem final kombinierten Bild zu erlauben;
- Konfigurieren der ersten Grafikschicht (110), um die Liste (150) an Elementen unter Verwendung eines ersten grafischen Effekts anzuzeigen und Konfigurieren der zweiten Grafikschicht (120), um die Liste (150) an Elementen unter Verwendung eines zweiten grafischen Effekts anzuzeigen, welcher sich von dem ersten grafischen Effekt unterscheidet;
- Empfangen einer Eingabe zum Navigieren der Liste (150) an Elementen;
- Verarbeiten der Liste (150) an Elementen gemäß der empfangenen Eingabe, um die Anzeige der Elemente (151-155) gleichzeitig auf der ersten Grafikschicht (110) und der zweiten Grafikschicht (120) zu verändern.

2. Verfahren nach Anspruch 1, ferner umfassend ein Erzeugen einer dritten Grafikschicht (130) unterhalb der zweiten Grafikschicht (120), wobei die erste Grafikschicht (110) wenigstens teilweise transparente Bereiche (111, 113) außerhalb des leeren Bereichs (112) umfasst, und wobei die zweite Grafikschicht (120) leere Bereiche (121, 123) außerhalb des Bereichs (122) umfasst, welcher dem leeren Bereich (112) der ersten Grafikschicht (110) entspricht.

3. Verfahren nach Anspruch 1, ferner umfassend ein Erzeugen einer dritten Grafikschicht (130) zwischen der ersten Grafikschicht (110) und der zweiten Grafikschicht (120), wobei die erste Grafikschicht (110) wenigstens teilweise transparente Bereiche (111, 113) außerhalb des leeren Bereichs (112) umfasst, und wobei die dritte Grafikschicht (120) einen leeren Bereich (132) in dem Bereich umfasst, welcher dem leeren Bereich (112) der ersten Grafikschicht (110) entspricht.

4. Verfahren nach den Ansprüchen 2 oder 3, wobei die dritte Grafikschicht ein Standbild umfasst.

5. Verfahren nach den Ansprüchen 2 oder 3, wobei die dritte Grafikschicht ein Videosignal umfasst.

6. Verfahren nach Anspruch 1, **dadurch gekennzeichnet, dass** die Elemente (151-155) der Liste (150) Textelemente sind.

7. Verfahren nach Anspruch 1, **dadurch gekennzeichnet, dass** der erste grafische Effekt oder der zweite grafische Effekt Schrifteigenschaften angibt, mit denen die Textelemente angezeigt werden.

8. Verfahren nach Anspruch 1, **dadurch gekennzeichnet, dass** die Elemente (151-155) der Liste (150) grafische Symbole sind, und wobei der erste grafische Effekt oder der zweite grafische Effekt wenigstens eines aus folgendem angibt: Anzeige des Symbols in einer bestimmten Farbe, mit einem Weichzeichnen-Effekt, mit einem Schärfe-Effekt, mit einem Halo-Effekt, mit einem Glanzlicht-Effekt, in einem vergrößerten Maßstab.

9. Verfahren nach Anspruch 1, **dadurch gekennzeichnet, dass** der erste grafische Effekt einen Hintergrund angibt.

10. Verfahren nach Anspruch 1, **dadurch gekennzeichnet, dass** zwei Bereiche (111, 113) der ersten Grafikschicht (110) an einen Bereich (122) der zweiten Grafikschicht (120) angrenzen, wenn die Schichten (110, 120, 130) übereinander angezeigt werden.

11. Verfahren nach Anspruch 1, **dadurch gekennzeichnet, dass** die Anzeige der Elemente (151-155) auf der ersten Grafikschicht (110) und auf der zweiten Grafikschicht (120) gleichzeitig als ein gleichmäßiger Scroll-Übergang verändert wird.

12. System zum Erzeugen einer grafischen Benutzeroberfläche mit einer Liste (150) an Elementen, welche in einem Listenspeicher (203) gespeichert sind, wobei die Liste (150) dazu eingerichtet ist, über eine Benutzeroberfläche (204) navigiert zu werden, **dadurch gekennzeichnet, dass** das System ferner umfasst:
- eine Multilayer-Benutzeroberfläche (201), welche dazu eingerichtet ist, eine erste Grafikschicht (110) vor einer zweiten Grafikschicht (120) anzuzeigen, wobei die erste Grafikschicht (110) einen leeren Bereich (112) umfasst, welcher dazu eingerichtet ist, Sichtbarkeit der Inhalte der unteren Schichten (120) in einem final kombinierten Bild zu erlauben;
- ein Grafikprozessor (202), welcher dazu eingerichtet ist, die erste Grafikschicht (110) zu steuern/regeln, um die Liste (150) an Elementen unter Verwendung eines ersten grafischen Effekts anzuzeigen, und die zweite Grafikschicht (120) zu steuern/regeln, um die Liste (150) an Elementen unter Verwendung eines zweiten grafischen Effekts anzuzeigen, welcher sich von dem ersten grafischen Effekt unterscheidet.

13. Computerprogramm, umfassend Programmcodemittel zum Durchführen all der Schritte des computerimplementierten Verfahrens gemäß einem der Ansprüche 1-11, wenn das Programm auf einem Computer ausgeführt wird.

14. Computerlesbares Medium, welches computerausführbare Anweisungen speichert, welche all die Schritte des computerimplementierten Verfahrens gemäß einem der Ansprüche 1-11 durchführt, wenn es auf einem Computer ausgeführt wird.

## Revendications

1. Procédé de génération d'une interface utilisateur graphique avec une liste d'éléments, **caractérisé en ce qu'**il comprend les étapes de :
- réception d'une liste (150) d'éléments ;
- création d'une première couche graphique (110) devant une deuxième couche graphique (120), la première couche graphique (110) comprenant une zone vierge (112) configurée pour permettre une visibilité du contenu des couches inférieures (120) dans une image combinée finale ;
- configuration de la première couche graphique (110) pour afficher la liste (150) d'éléments à l'aide d'un premier effet graphique et configuration de la deuxième couche graphique (120) pour afficher la liste (150) d'éléments à l'aide d'un second effet graphique différent du premier effet graphique ;
- réception d'une entrée pour naviguer dans la liste (150) d'éléments ;
- traitement de la liste (150) d'éléments selon l'entrée reçue pour modifier l'affichage des éléments (151 à 155) simultanément sur la première couche graphique (110) et sur la deuxième couche graphique (120).

2. Procédé selon la revendication 1, comprenant en outre la création d'une troisième couche graphique (130) en dessous de la deuxième couche graphique (120), la première couche graphique (110) comprenant des zones au moins partiellement transparentes (111, 113) hors de la zone vierge (112) et la deuxième couche graphique (120) comprenant des zones vierges (121, 123) hors de la zone (122) correspondant à la zone vierge (112) de la première couche graphique (110).

3. Procédé selon la revendication 1, comprenant en outre la création d'une troisième couche graphique (130) entre la première couche graphique (110) et la deuxième couche graphique (120), la première couche graphique (110) comprenant des zones au moins partiellement transparentes (111, 113) hors de la zone vierge (112) et la troisième couche graphique (120) comprenant une zone vierge (132) dans la zone correspondant à la zone vierge (112) de la première couche graphique (110).

4. Procédé selon la revendication 2 ou 3, dans lequel la troisième couche graphique comprend une image fixe.

5. Procédé selon les revendications 2 ou 3, dans lequel la troisième couche graphique comprend un signal vidéo.

6. Procédé selon la revendication 1, **caractérisé en ce que** les éléments (151 à 155) de la liste (150) sont des éléments de texte.

7. Procédé selon la revendication 1, **caractérisé en ce que** le premier effet graphique ou le second effet graphique indique des propriétés de police grâce auxquelles les éléments de texte sont affichés.

8. Procédé selon la revendication 1, **caractérisé en ce que** les éléments (151 à 155) de la liste (150) sont des icônes graphiques et dans lequel le premier effet graphique ou le second effet graphique indique au moins l'un parmi : l'affichage de l'icône dans une couleur particulière, avec un effet de flou, avec un effet de netteté, avec un effet de halo, avec un effet de surbrillance, dans une échelle agrandie.

9. Procédé selon la revendication 1, **caractérisé en ce que** le premier effet graphique indique un arrière-plan.

10. Procédé selon la revendication 1, **caractérisé en ce que** lorsque les couches (110, 120, 130) sont affichées l'une par-dessus l'autre, deux zones (111, 113) de la première couche graphique (110) sont adjacentes à une zone (122) de la deuxième couche graphique (120).

11. Procédé selon la revendication 1, **caractérisé en ce que** l'affichage des éléments (151 à 155) est modifié simultanément sur la première couche graphique (110) et sur la deuxième couche graphique (120) sous forme de transition douce de défilement.

12. Système de génération d'une interface utilisateur graphique avec une liste (150) d'éléments stockée dans une mémoire de liste (203), la liste (150) étant configurée pour qu'on puisse y naviguer via une interface utilisateur (204), **caractérisé en ce que** le système comprend en outre :
- une interface utilisateur multicouche (201) configurée pour afficher une première couche graphique (110) devant une deuxième couche graphique (120), la première couche graphique (110) comprenant une zone vierge (112) configurée pour permettre une visibilité du contenu des couches inférieures (120) dans une image combinée finale ;
- un processeur graphique (202) configuré pour commander à la première couche graphique (110) d'afficher la liste (150) d'éléments à l'aide d'un premier effet graphique et pour commander à la deuxième couche graphique (120) d'afficher la liste (150) d'éléments à l'aide d'un second effet graphique différent du premier effet graphique.

13. Programme informatique comprenant un moyen de code de programme permettant de réaliser toutes les étapes du procédé implémenté par ordinateur selon l'une quelconque des revendications 1 à 11 lorsque ledit programme est exécuté sur un ordinateur.

14. Support lisible par ordinateur stockant des instructions exécutables par ordinateur réalisant toutes les étapes du procédé implémenté par ordinateur selon l'une quelconque des revendications 1 à 11 lorsqu'elles sont exécutées sur un ordinateur.
